# EUROPEAN PATENT APPLICATION

(11) **EP 2 779 581 A1**
(43) Date of publication of application: **17.09.2014**
(21) Application number: 14157955.7
(22) Date of filing: 05.03.2014
(51) Int. Cl.: H04L 29/08

(54) **Wire-speed pending interest table**

(30) Priority: 14.03.2013 US 201313827099
(71) Applicant: ALCATEL LUCENT, 92100 Boulogne-Billancourt (FR)
(72) Inventor: Varvello, Matteo, New Jersey, 07974-0636 (US); Perino, Diego, 75007 Paris (FR)
(74) Representative: Louis Pöhlau Lohrentz

(57) **Abstract**

Various embodiments relate to a method performed by a router. The method may include: receiving, at a first line card of the router, a request for content having a content identifier; determining a second line card that is responsible for the content identifier; switching the request for content to the second line card; and updating a pending interest table at the second line card based on the request for content. Various embodiments relate to a router for content based routing that receives a plurality of requests for contents including a content identifier. The router may include: a fabric switch; and a plurality of line cards interconnected by the fabric switch, each line card includes a network processor and a pending interest table configured to store entries for a subset of the requests defined by the content identifier.

## Description

### TECHNICAL FIELD

Various exemplary embodiments disclosed herein relate generally to telecommunications.

### BACKGROUND

The Internet has evolved from a medium to interconnect machines into a medium to connect machines with content such as videos and photos. While the Internet developed on top of various mechanics, such as routing information via IP address, future architectures may employ alternative mechanisms in view of the current state of the Internet. One common principle among many proposals is that these future architectures may be centered on the content provided, rather than the machines themselves.

Information-centric networking (ICN) is a more recent paradigm where content is requested by name, rather than location. Such a system may also be referred to as content-centric networking or named data networking. This paradigm may employ name-based routing, wherein a router may move traffic to a destination server based on the "content name." As such, Internet routers may be provided with explicit information as to the content being moved.

One result of name-based routing is that routers may have more information regarding the content and how it should be treated. A pending interest table may be used to track pending requests for content. This presents new challenges in efficiently storing the table and quickly forwarding traffic using the table.

### SUMMARY

In view of the foregoing, it would be desirable to provide a router for performing content based routing at high speed. In particular, by providing a router with a distributed pending interest table for tracking pending requests for content, routing at line-speed may be achieved.

In light of the present need for content based routing methods and devices, a brief summary of various exemplary embodiments is presented. Some simplifications and omissions may be made in the following summary, which is intended to highlight and introduce some aspects of the various exemplary embodiments, but not to limit the scope of the invention. Detailed descriptions of a preferred exemplary embodiment adequate to allow those of ordinary skill in the art to make and use the inventive concepts will follow in later sections.

Various exemplary embodiments relate to a method performed by a router. The method may include: receiving, at a first line card of the router, a request for content having a content identifier; determining a second line card that is responsible for the content identifier; switching the request for content to the second line card; and updating a pending interest table at the second line card based on the request for content. In various embodiments, the step of determining a second line card includes: hashing the content identifier to obtain a content hash; and performing a modulus operation on the content hash based on a number of line cards in the router.

In various embodiments, the step of updating the pending interest table includes: determining that the pending interest table does not include an entry for the content identifier; creating a new pending interest table entry including the content identifier and the first line card; and forwarding the request for content based on the content identifier. The method may also include forwarding the request for content to a plurality of the line cards.

In various embodiments, the step of updating the pending interest table includes: determining that the pending interest table already includes an entry for the content; and updating the pending interest table entry with the first line card.

In various embodiments, the method further includes: receiving, at a third line card, data responsive to the request for content having the content identifier; determining that the second line is responsible for the data based on the content identifier; switching the data to the second line card; looking up a pending interest table entry in the pending interest table based on the content identifier; identifying the first line card that received a request for the content based on the pending interest table entry; forwarding the data responsive to the request from the first line card; and deleting the pending interest table entry from the pending interest table. The method may further include: determining that a plurality of line cards, including the first line card, received the request for the content based on the pending interest table; and multicasting the data responsive to the request from the plurality of line cards indicated by the pending interest table.

In various embodiments, the pending interest table is a d-left open-addressed hash-table.

In various embodiments, the pending interest table includes a plurality of pending interest table entries, each entry including: a content identifier, an expiration time, a nonce, and a list of line cards.

In various embodiments, the method further includes: storing a nonce included in the request for content in the pending interest table; receiving a second request for the content having the content identifier; determining that the second request includes the nonce stored in the pending interest table; and determining that the second request has looped back to the router.

Various exemplary embodiments relate to a router for content based routing that receives a plurality of requests for contents including a content identifier. The router may include: a fabric switch and a plurality of line cards interconnected by the fabric switch, each line card including a network processor and a pending interest table configured to store entries for a subset of the requests defined by the content identifier, wherein the network processor of a line card that receives a request is configured to determine which line card of the plurality of line cards is configured to process the received request based on the content identifier.

In various embodiments, the network processor is configured to hash the content identifier included in a received request and perform a modulus operation on the hash result to determine the line card configured to process the received request.

In various embodiments, the pending interest table includes a plurality of pending interest table entries, each entry including: a content identifier, an expiration time, a nonce, and a list of line cards.

In various embodiments, the pending interest table of a line card is smaller than a cache of the network processor.

In various embodiments, the pending interest table is an open-addressed d-left hash table.

In various embodiments, the router further includes a forwarding information base including a mapping of content identifiers to interfaces.

In various embodiments, each line card is configured to: receive a request for content from a first line card via the fabric switch; update the pending interest table of the line card with the content identifier and an identifier of the first line card; and forward the request for content based on an interface indicated by the forwarding information base for the content identifier.

In various embodiments, each line card is further configured to: receive content data responsive to a request for content, the content data including a content identifier; and determine which line card of the plurality of line cards is configured to process the received content data based on the content identifier.

In various embodiments, each line card is further configured to: receive the content data responsive to a request for content from the third line card via the fabric switch; determine the first line card based on the content identifier and the pending interest table; and forward the content data to the first line card.

It should be apparent that, in this manner, various exemplary embodiments enable high-speed routing for information centric networking or named data networking In particular, by providing a distributed pending interest table, a router may track pending requests for content at a high speed.

### BRIEF DESCRIPTION OF THE DRAWINGS

In order to better understand various exemplary embodiments, reference is made to the accompanying drawings, wherein:
FIG. 1 illustrates an exemplary network for information-centric networking;
FIG. 2 illustrates an exemplary router processing a request for content
FIG. 3 illustrates an exemplary router processing content data;
FIG. 4 illustrates an exemplary line card;
FIG. 5 illustrates an exemplary data arrangement for storing a pending interest table;
FIG. 6 illustrates an exemplary method of processing a received request for content; and
FIG. 7 illustrates an exemplary method of processing received data.

### DETAILED DESCRIPTION

Referring now to the drawings, in which like numerals refer to like components or steps, there are disclosed broad aspects of various exemplary embodiments.

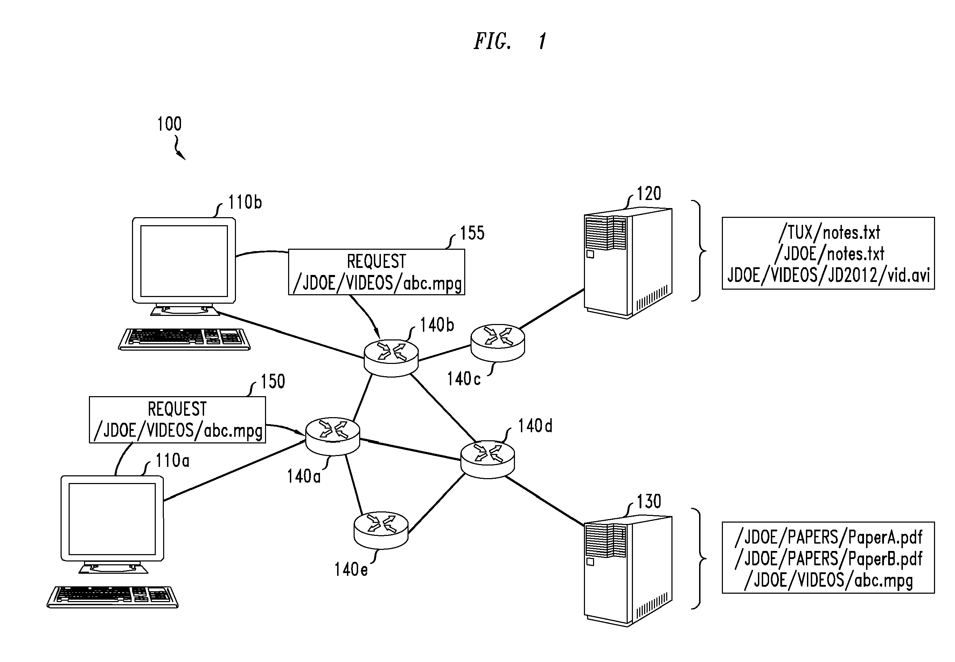

FIG. 1 illustrates an exemplary network 100 for routing messages. In various embodiments, exemplary network 100 may be the Internet or a portion thereof. It will be apparent to those of skill in the art that exemplary network 100 may constitute, in some respects, a simplification. For example, exemplary network 100 may include numerous additional clients, servers, routers, switches, and/or other network devices. As illustrated, exemplary network 100 may include a number of network devices: two client devices 110a, 110b, two servers 120, 130, and five routers 140a-e. As used herein, the term "router" may be understood to refer to any network device capable of receiving data messages and forwarding data messages toward their ultimate destination. Thus, the term "router" may encompass network devices operating at any layer of the OSI model of networks such as, for example, a switch (Layer 2) or a true router (Layer 3). Further, the term "message" will be understood to encompass any chunk of data transferred from one device to another such as, for example, a frame or a packet.

As shown, routers 140a-e may interconnect client device 110, server 120, and server 130, such that messages may be exchanged between these devices. As noted, exemplary network 100 may constitute a simplification and, as such, there may be a number of intermediate routers and/or other network devices (not shown) providing communication between those network devices that are illustrated. For example, router 140c may be connected to server 120 through one or more intermediate network devices (not shown).

Client devices 110a, 110b may be any device capable of requesting and receiving content via a network. For example, client device 110a may include a personal computer, laptop, mobile phone, tablet, or other device.

Servers 120, 130 may each be any device capable of receiving requests and serving content. For example, servers 120, 130 may each include a personal computer, stand-alone server, blade server, or other device. Servers 120, 130 may each host a number of content items, each item being identified by at least one content name. As illustrated, for example, server 120 may host three content items identified as "/TUX/notes.txt," "/JDOE/notes.txt," and "/JDOE/VIDEOS/JD2012/vid.avi." As another example, server 130 may also host three content items identified as "/JDOE/PAPERS/PaperA.pdf," "/JDOE/PAPERS/PaperB.pdf," and "/JDOE/VIDEOS/abc.mpg." Client device 110a may request the delivery of any of these items by sending a request message 150, which may then be routed by routers 140a-e to the appropriate server 120, 130. A request message 150 or the requested content item may be referred to an "Interest." Routing for a content request message or Interest may be performed based on the name of the content requested. Thus, the content name may be referred to as a destination address of the request message. The server may then use the request to locate the appropriate content and transmit the content back to client device 110a via routers 140a-e.

As an example, FIG. 1 illustrates client device 110a transmitting a request message 150 to router 140a. Request message 150 may include a request for content named "/JDOE/VIDEOS/abc.mpg." As part of a ICN system, the request message 150 may be considered to be addressed to "/JDOE/VIDEOS/abc.mpg." Thus, message 150 may request content stored by server 130. Upon receiving request message 150, router 140a may then perform various routing operations to determine to which router, or "next hop," the request message 150 should be forwarded in order to advance the request message 150 to its ultimate destination. A router 140 may use a forwarding information base (FIB) to determine the next hop.

To provide symmetric routing, that is, routing for returned content data, routers 140a-e may implement a pending interest table (PIT). As such, each router 140a-e may store a record of requested content and the source of the request. When content data is returned to a router, the router may use the record to forward the content data toward the requestor. The PIT may also allow each router 140a-e to track concurrent requests for the same content and provide multicast forwarding of content data to satisfy concurrent requests. The PIT may also enable a router to provide multipath route discovery and identify routing loops.

In various alternative embodiments, request message 150 may address a specific "chunk" of the content requested. For example, request message 150 may request "/JDOE/VIDEOS/abc.mpg/chunk2." In various such embodiments wherein all chunks for a particular content item are stored at the same location, the destination address used in processing the message may omit the chunk identifier, thus routing based on "/JDOE/VIDEOS/abc.mpg." In various alternative embodiments such as, for example, embodiments where content may be distributed among multiple servers, routers may route based on the chunk identifier as well, thus routing based on "/JDOE/VIDEOS/abc.mpg/chunk2" in this example.

Upon receiving request message 150, router 140a may update the PIT with information extracted from the request message 150. Router 140a may then determine a next hop for the request based on the requested content. A router 140a-e may consult the locally-stored FIB to determine the appropriate next hop. Selection of a next hop may encompass a selection of an interface of the present device over which a message is to be forwarded. In various alternative embodiments, selection of a next hop may encompass a selection of the next router or other device to receive a forwarded message from the present device. In various embodiments, router 140a may use multipath route discovery and select to multiple next hops such as, for example, routers 140b and 140d. Router 140a may then proceed to transmit the message 150 to router 140d, where the process may repeat itself, this time with respect to router 140d instead of router 140a.

A router may receive multiple requests for the same content. For example, router 140d may receive request 150 originating at client device 110 from router 140a and receive request 155 originating at client device 110b from router 140d. In such a case, router 140d may use the PIT to associate the two requests for the same content. When the content data is received, router 140d may multicast the content data to both router 140a and router 140b. Any of routers 140a-e may perform a similar process for serving requests for the same content. In various embodiments, a router may also include a content store for storing popular content to respond to multiple requests.

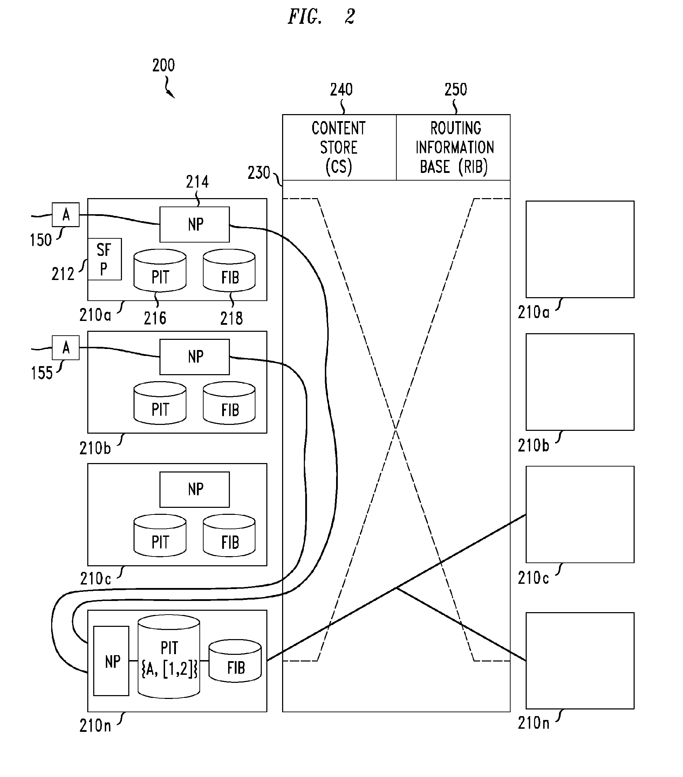

The foregoing description is presented as an overview of an exemplary operation of network 100 and may constitute a simplification and/or abstraction in some respects. A more detailed operation of exemplary network 100 and one or more of routers 140a-e will now be presented with respect to FIGS. 2-6.

FIG. 2 illustrates an exemplary router 200 receiving a request for content such as request 150. Router 200 may have a distributed architecture. Router 200 may include a plurality of line cards 210a-n interconnected by a fabric switch 230. The line cards 210a-n are shown as logically divided into input and output, however, it should be appreciated that each line card 210a-n may both receive and transmit messages. Router 200 may delegate each line card 210 to process a subset of requests. Accordingly, each line card 210 may be configured to process requests belonging to its delegated subset. Router 200 may delegate requests according to the requested name. Router 200 may use a hash function and modulus operation to equally distribute requests among the line cards 210. In various embodiments, router 200 may also include centralized components such as a content store (CS) 240 and a routing information base (RIB) 250. Alternatively, the CS 240 may be distributed among line cards 210.

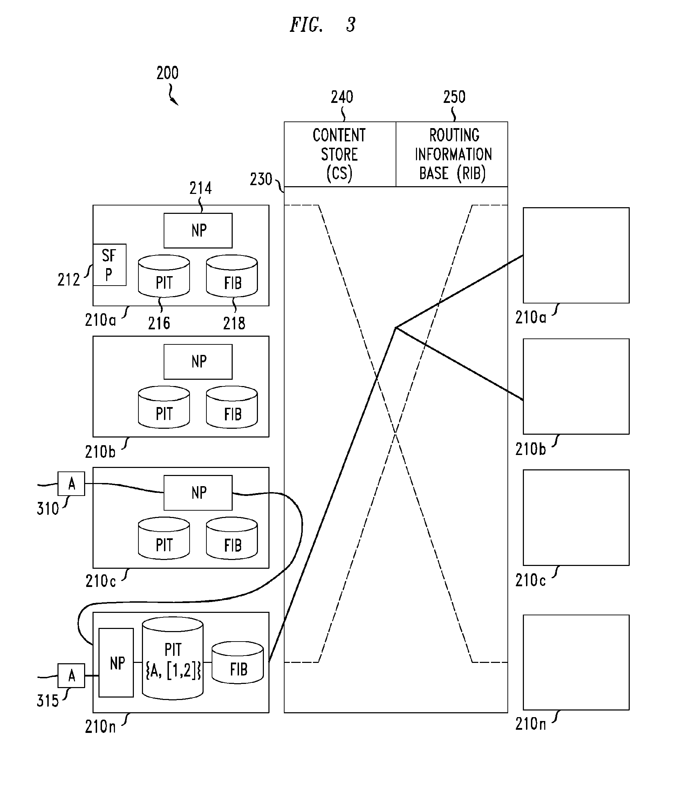

Line cards 210 may receive requests for content from another network node. Line cards 210 may also receive content data from other network nodes, which will be described in further detail below regarding FIG. 3. Each line card 210 may include a line interface 212, network processor 214, pending interest table 216, and a forwarding information base 218. Line interface 212 may be a small-form factor pluggable interface to a communication line such as a fibre optic cable or copper wire. Network processor 214 may be a software-programmable device optimized for networking applications. Forwarding information base (FIB) 218 may be a data arrangement indicating a next hop for forwarding a received message. The FIB 218 may include a mapping of content identifiers to interfaces or line cards.

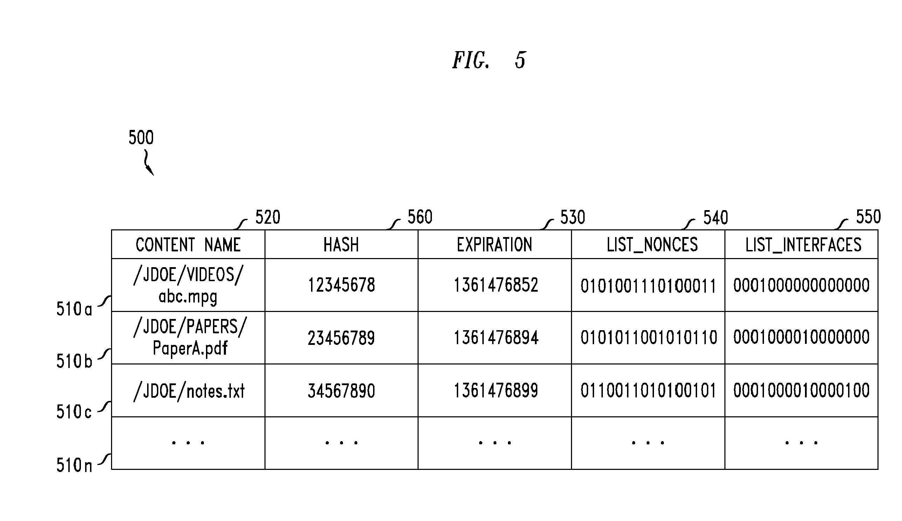

Pending interest table 216 may be a data arrangement for storing information regarding received requests for content that have not received content data. Router 200 may use a distributed or third-party placement for pending interest table 216. Each line card 210 may include a pending interest table 216 storing information regarding a subset of received requests for content. Pending interest table 216 will be described in further detail below regarding FIG. 5.

Fabric switch 230 may be any switch capable of transferring data between line cards 210. For example, the fabric switch 230 may be a full mesh connection or a plurality of switch elements connected via a bus. As will be described in further detail below, the third-party placement of the PIT may increase the number of switching operations. In various embodiments, fabric switch 230 may include a plurality of fabric switches operating in parallel to allow high speed switching.

As shown in FIG. 2, router 200 may receive a request for content 150 at line card 210a. For example, the request for content 150 may request content named "A". The network processor 214 of line card 210a may determine the line card responsible for handling the received request based on the requested content. In various embodiments, the network processor 214 may determine the responsible line card 215 from among line cards 210 as j = H(A)modN, where H is a hash function, A is the content name, and N is the number of line cards. Accordingly, the receiving line card 210 may first perform a hash function on the content name. For example, the line card 210 may perform a cyclic redundancy check such as CRC32 to produce a fixed length hash value. Next, the line card 210 may perform a modulus operation based on the number of line cards in the router. The modulus operation may use the number of line cards including a distributed PIT, or a number of active line cards. The result of the modulus operation may be an identifier of the responsible line card 215. The line card 210 may then switch the request using fabric switch 220 to the responsible line card 215. In the example shown in FIG. 2, the line card 210n may be the responsible line card 215. Reference to responsible line card 215 indicates the line card responsible for a particular content. It should be apparent that any line card 210 may be the responsible line card 215 depending upon the requested or received content.

As illustrated in FIG. 2, the responsible line card 210n may process the request. As will be described in further detail below, the responsible line card 210n may update the PIT based on the request. The responsible line card 210n may look up the content in the PIT. If the PIT does not include an entry matching the requested content, a new entry may be created. Then, the responsible line card 210n may look up forwarding information in the FIB, and forward the request to one or more appropriate line cards. For example, the responsible line card 210n may forward the request to line card 210c, and also transmit the request itself.

A second request message 155 requesting the same content may arrive at a second line card 210b. The second line card may determine the responsible line card 215 in the same manner as the first line card 210a, and determine that line card 210n is the responsible line card. Accordingly, the second line card 210b may switch the second request message to the responsible line card 210n. The responsible line card 210n may look up the content in the PIT, and identify the entry for the content. The responsible line card 210n may then update the PIT entry with the new source interface information. The responsible line card 210n may then drop the packet because the content has already been requested.

FIG. 3 illustrates the exemplary router 200 processing received content data 310, which may have the name "A". The content data 310 may arrive at line card 210c, which may have forwarded the request 150. Upon receiving the content data 310, the line card 210c may determine the responsible line card for the content data. As described above, the line card 210c may determine the responsible line card 215 by j = H(A)modN. The content name included in the content data may be the same as the content name used in the request for content. Accordingly, the responsible line card 215 for the content data may be the same responsible line card 215as for the request for content. In the example shown, the line card 210c may switch the content data to the responsible line card 210n.

The responsible line card 210n may process the content data by looking up the content data in the PIT. If the PIT includes an entry matching the content, the line card 210n may forward the content data to any line cards indicated in the PIT entry. For example, if the content data 310 corresponds to the content requests 150 and 155, the responsible line card 210n may multicast the content data to both line card 210a and line card 210b. Accordingly, the router 200 may respond to each pending content request. The responsible line card 210n may also delete the matching PIT entry from the PIT because the pending content requests have been satisfied.

Router 200 may receive a second content data. For example content data 315 may arrive in response to a multipath request forwarded on both line card 210c and line card 210n. When the second content data 315 arrive, the receiving line card 210n may determine the responsible line card 215. If the receiving line card and responsible line card are the same, the line card may continue processing the message without switching the message to a different line card. When processing the second content data 315, the responsible line card 210n may determine that no PIT entry matches the content (because the PIT entry was previously consumed). Accordingly, the responsible line card 210n may simply drop the content data 315. In various embodiments, a line card 210 may update routing information in the FIB based on receipt of a first or second content data. For example, line card 210 may update the FIB to indicate that line card 210c is associated with a faster path to content A because line card 210c was the first to receive the requested content data.

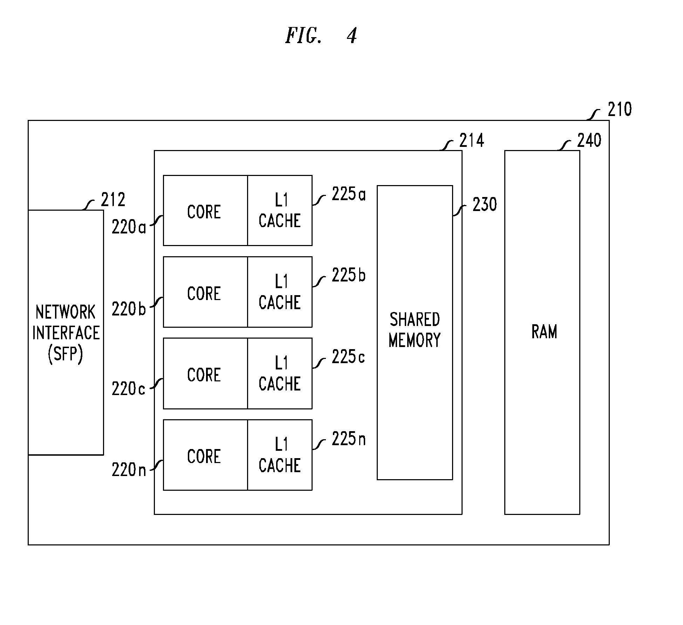

FIG. 4 illustrates an exemplary line card 210. Line card 210 may operate as described above regarding FIGS. 2-3. Line card 210 may include a network interface 212, network processor 214, and memory 240.

Network interface 212 may be any interface for coupling a transmission medium to the line card 210. For example, network interface 212 may be a small form factor pluggable (SFP+) 10Gb interface.

Network processor 214 may be any processor for processing data packets. In various exemplary embodiments, the network processor 214 may be a network processor such as the Cavium Octeon Plus CN5650 network processor. Such a network processor may be a multi-core processor. As illustrated in FIG. 4, the network processor may include a plurality of cores 220a-n. Each core 220 may be associated with an L1 cache. The network processor 214 may also include a shared memory 230. The network processor 214 may also have access to an off board memory such as RAM 240. As will be appreciated by those skilled in the art, memories located closer to the processor core may be faster than memories located further away. It should also be appreciated that memories closer to the core tend to be more expensive and significantly smaller than memories located further away. Accordingly, the location of the memory used to store a data arrangement such as the PIT 216 may significantly impact the processing speed of a line card 210. In various embodiments, the PIT 216 may preferably be located entirely on-chip, that is in L1 cache 225 and shared memory 230. By using a third-party placement where each line card is responsible for only a subset of content names, the size of a PIT for an individual line card may be minimized.

FIG. 5 illustrates an exemplary data arrangement 500 for storing a pending interest table 216. Various data structures may used for storing data arrangement 216. For example, potential data structures include counting Bloom filters, hash-tables, and name prefix tries. A particular data structure may be chosen based on the performance of the network processor 214 and the expected load. In various embodiments, an open-addressed d-left hash table (DHT) may provide an effective balance of size and speed. A DHT may use d hash functions and d tables to reduce the number of collisions in the hash table. In particular, a DHT using parallel access to each of the d sub-tables may provide a low deterministic access time.

Data arrangement 500 may store a plurality of PIT entries 510a-n. Each PIT entry may store a tuple including: the content name field 510, a list of interfaces field 550, a list of nonces field 540, and an expiration field 530. The content name field 520 may store the actual content name requested. In various embodiments, the content name may be a string of characters designating a file name. The length of the content name may be unknown. In various embodiments, the content name field 520 may include a pointer to a content name. As such, the content name field 520 may be fixed in size, for example 32 bits.

Expiration field 530 may indicate a time when the pending interest entry 510 expires. The expiration field 530 may be set based on the time a first request for content arrives. When a new pending interest entry 510 is created for a request, the network processor 214 may add a configurable offset to the current time to determine the expiration time. The expiration time may prevent PIT from becoming too large and may help prevent various flooding attacks. Entries 510 that have passed their expiration time may be deleted. In various embodiments, the network processor 214 may use a lazy algorithm that deletes expired entries 510 when they are accessed.

The list of nonces field 540 may be used to detect routing loops. Each request message may include a randomly generated nonce. The list of nonces field 540 may include a list of nonces that have been received in pending request messages. When a new request message arrives, the nonce may be compared to the list of nonces. If the nonce is already present in the list of nonces, the new request message may be identified as looped request message and dropped. In various embodiments, the list of nonces field may be limited in length, for example, 16 bits.

The list of interfaces field 550 may be used for responding to multiple request messages using multicasting. The list of interfaces field 550 may keep track of each line card that has received a pending request for the content. In various embodiments, the list of interfaces field 550 may include a bit mapping of line cards. The list of interfaces field 550 may be limited in size to the number of interfaces, for example, the list of interfaces field 550 may be 16 bits.

In various embodiments, data arrangement 500 may also include a hash field 560. The hash field 560 may store a hash of the content name. The hash value stored in hash field 560 may be generated by the same hash function used to determine the responsible line card. Accordingly, the hash function may be performed only once. The hash field 560 may be used for identifying a PIT entry 510. In various embodiments, the hash field 560 may be a fixed size of 32 bits.

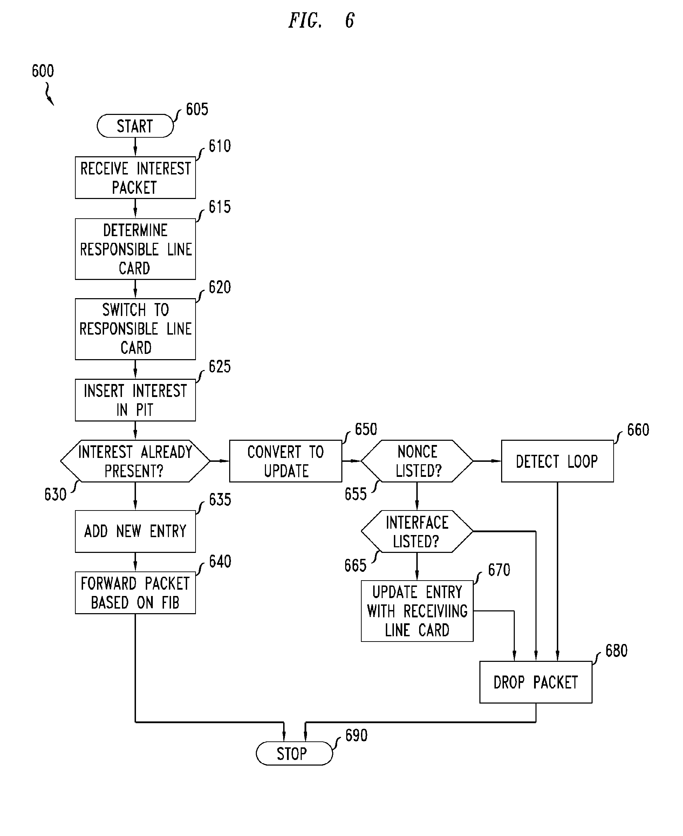

FIG. 6 illustrates an exemplary method 600 of processing a received request for content or Interest. The method 600 may be performed by the various components of a router 200. The method 600 may begin at step 605 and proceed to step 610.

In step 610, the router 200 may receive a content request or Interest message 150 at a receiving line card 210. The Interest message may include a content name of the requested content.

In step 615, the receiving line card may determine the responsible line card 220ⱼ for the Interest. In various embodiments, the responsible line card may be determined by hashing the content name and performing a modulus operation. The responsible line card 215 may determined by j = H(A)modN. The receiving line card 210 may first perform a hash function, such as CRC32 on the content name. Then the receiving line card 210 may perform a modulus operation based on the number of active line cards. The result of the modulus operation may be an identifier of the responsible line card.

In step 620, the receiving line card 210 may switch the Interest message to the responsible line card 215 using fabric switch 220. The receiving line card 210 may add information to the Interest message such as the hash value and an identifier of the receiving interface.

In step 625, the responsible line card 215 may insert the Interest into the local PIT. During the insert operation, in step 630, the responsible line card 215 may look up the content or the hash of the content to determine whether the PIT contains an entry corresponding to the Interest. If the PIT already contains an entry for the Interest, the method may proceed to step 650. If the PIT does not contain an entry for the Interest, the method may proceed to step 635.

In step 635, the responsible line card 215 may add a new entry 510 to the PIT. The responsible line card 215 may populate the new entry 510 with the content name, content hash, and nonce from the Interest packet. The responsible line card 215 may generate a expiration time based on the current time that the Interest was received and a configurable offset. The expiration time may be stored in expiration field 530. The responsible line card 215 may also generate a list of interfaces indicating the receiving interface as the only interface.

In step 640, the responsible line card 215 may forward the Interest packet based on the FIB The responsible line card 215 may look up the content in the FIB to determine at least one output interface on which to forward the Interest packet. The responsible line card 215 may use the fabric switch 220 to forward the Interest packet to the output interface. If the output interface is the same as the responsible line card 215, the responsible line card 215 may forward the Interest packet without using the fabric switch 220. The method may then proceed to step 690, where the method 600 may end.

In step 650, the insert operation may be converted to an update operation on the matching PIT entry 510. Accordingly, the update operation may make use of a PIT entry 510 retrieved during the insert operation without performing a second lookup in the data arrangement 500.

In step 655, the nonce of the received Interest packet may be compared with the nonce field 540. If the received nonce matches the nonce field 540, the method may proceed to step 660. If the received nonce does not match the nonce field 540, the method may proceed to step 665.

In step 660, the line card 210 may determine that a loop has been detected because the same nonce has been seen twice. The router 200 may only forward a request message the first time a request for the content is received. Accordingly, if the same nonce is seen again, it is likely the request for content has been looped back to the same router. The line card 210 may attempt to remedy the loop. For example, the line card 210 may attempt to update the FIB. The line card 210 may report the loop, for example, by reporting the detected loop to a network management entity. The method may proceed to step 680.

In step 665, the line card 210 may compare the receiving line card with the list of interfaces. If the receiving line card is already listed on the list of interfaces, the method may proceed to step 680. If the line card is not listed on the list of interfaces, the method may proceed to step 670.

In step 670, the line card 210 may update the entry 510 with the receiving line card. The line card may add the bit corresponding to the receiving line card to the list of interfaces 550. Accordingly, the list of interfaces 550 may indicate that a plurality of line cards 210 received a request for the content. As will be described in further detail below, multicasting may be used to satisfy the plurality of requests based on a single received content data message.

In step 680, the line card 210 may drop the received Interest packet without forwarding it. It may be unnecessary to forward the received Interest packet because the router has already forwarded a request for the content that is still pending. The method may proceed to step 690, where the method ends. It should be appreciated that method 600 may be performed repeatedly by router 200 for incoming messages. Moreover, method 600 may be performed simultaneously by various line cards 210 within router 200.

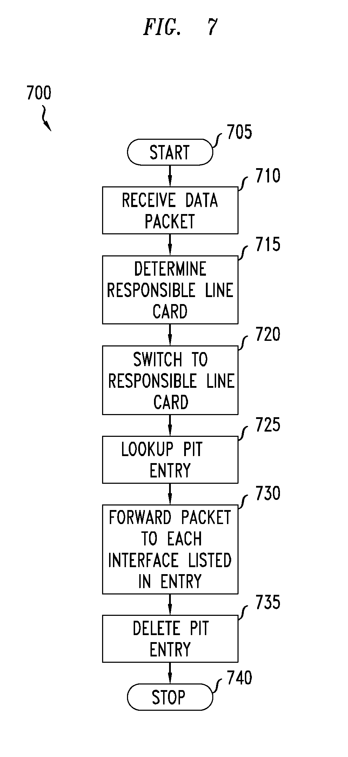

FIG. 7 illustrates an exemplary method 700 of processing received data. The method 700 may be performed by the various components of a router 200. The method 700 may begin at step 705 and proceed to step 710. The method 700 may be performed following method 600. The router 200 may perform method 600, wait for a response, then perform method 700 based on receiving a response.

In step 710, the router 200 may receive a content Data packet at a receiving line card 210. The content Data packet may include data corresponding to a requested content name. The receiving line card 210 may correspond to a forwarding line card 210 selected in step 640 of method 600.

In step 715, the receiving line card 210 may determine the responsible line card 215. The algorithm for determining the responsible line card 215 may be the same as the algorithm used in step 615 of method 600. For example, the responsible line card 215, may be found by j = H(A)modN. Accordingly, the responsible line card 215 may be the same line card 210 as determined in step 615.

In step 720, the receiving line card 210 may switch the content Data packet to the responsible line card 215. The receiving line card may add additional information to the content Data packet such as an identifier of the receiving line card.

In step 725, the responsible line card 215 may look up the content in the local PIT. The responsible line card 215 may use a delete operation to perform both the lookup and a subsequent deletion.

In step 730, the responsible line card 215 may extract the list of interfaces field 550 from the PIT entry 510. The responsible line card 215 may then use the fabric switch 220 to multicast the content Data packet to each line card 210 listed on the list of interfaces 550. The line cards 210 may forward the content Data packet to the next node.

In step 735, the responsible line card 215 may delete the PIT entry 510 because all pending requests have been satisfied. Accordingly, if an additional content Data packet arrives, the responsible line card 215 may drop the additional content Data packet. The method may proceed to step 740, where the method ends.

It should be appreciated that the methods 600 and 700 may be repeated by each router 200. Accordingly, the request message 150 shown in FIG. 1, may originate at user device 110a and arrive first at router 140a, then proceed to router 140d, and reach its destination at server 130. The content data message 310, may originate at server 130 in response to the request message 150. The content data message 310, may follow the reverse path of the request message 210 according to the PIT entries at the responsible line card 215 of each router 200. Accordingly, the content data message 310 may be routed to router 140d, then router 140a, and finally to user device 110a. It should also be noted that additional request messages such as message 155 may be routed until they intersect a pending route for the same content. For example, message 155 may be routed from router 140b to router 140d, where the PIT entry may indicate a pending request for the content. When router 140d receives the content data message 310, the content data message may be multicast to both router 140a and router 140b, so that both request message 150 and 155 may be satisfied. According to the foregoing, various exemplary embodiments provide for high-speed routing for information centric networking or named data networking In particular, by providing a distributed pending interest table, a router may track pending requests for content at a high speed.

It should be apparent from the foregoing description that various exemplary embodiments of the invention may be implemented in hardware and/or firmware. Furthermore, various exemplary embodiments may be implemented as instructions stored on a machine-readable storage medium, which may be read and executed by at least one processor to perform the operations described in detail herein. A machine-readable storage medium may include any mechanism for storing information in a form readable by a machine, such as a personal or laptop computer, a server, or other computing device. Thus, a machine-readable storage medium may include read-only memory (ROM), random-access memory (RAM), magnetic disk storage media, optical storage media, flash-memory devices, and similar storage media.

It should be appreciated by those skilled in the art that any block diagrams herein represent conceptual views of illustrative circuitry embodying the principals of the invention. Similarly, it will be appreciated that any flow charts, flow diagrams, state transition diagrams, pseudo code, and the like represent various processes which may be substantially represented in machine readable media and so executed by a computer or processor , whether or not such computer or processor is explicitly shown.

The functions of the various elements shown in the Figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional or custom, may also be included. Similarly, any switches shown in the FIGS. may be conceptual only. Their function may be carried out through the operation of program logic, through dedicated logic, through the interaction of program control and dedicated logic, or even manually, the particular technique being selectable by the implementer as more specifically understood from the context.

Although the various exemplary embodiments have been described in detail with particular reference to certain exemplary aspects thereof, it should be understood that the invention is capable of other embodiments and its details are capable of modifications in various obvious respects. As is readily apparent to those skilled in the art, variations and modifications can be affected while remaining within the spirit and scope of the invention. Accordingly, the foregoing disclosure, description, and figures are for illustrative purposes only and do not in any way limit the invention, which is defined only by the claims.

## Claims

1. A method performed by a router, the method comprising:
receiving, at a first line card of the router, a request for content having a content identifier;
determining a second line card that is responsible for the content identifier;
switching the request for content to the second line card;
updating a pending interest table at the second line card based on the request for content.

2. The method of claim 1, wherein the step of determining a second line card comprises:
hashing the content identifier to obtain a content hash; and
performing a modulus operation on the content hash based on a number of line cards in the router.

3. The method of any of claims 1 to 2, wherein the step of updating the pending interest table comprises:
determining that the pending interest table does not include an entry for the content identifier;
creating a new pending interest table entry including the content identifier and the first line card; and
forwarding the request for content based on the content identifier.

4. The method of claim 3, further comprising: forwarding the request for content to a plurality of the line cards.

5. The method of any of claims 1 to 4, wherein the step of updating the pending interest table comprises:
determining that the pending interest table already includes an entry for the content; and
updating the pending interest table entry with the first line card.

6. The method of any of claims 1 to 5, further comprising:
receiving, at a third line card, data responsive to the request for content having the content identifier;
determining that the second line is responsible for the data based on the content identifier;
switching the data to the second line card;
looking up a pending interest table entry in the pending interest table based on the content identifier;
identifying the first line card that received a request for the content based on the pending interest table entry;
forwarding the data responsive to the request from the first line card; and
deleting the pending interest table entry from the pending interest table.

7. The method of any of claims 1 to 6, wherein the pending interest table is a d-left open-addressed hash-table.

8. The method of any of claims 1 to 7, further comprising:
storing a nonce included in the request for content in the pending interest table;
receiving a second request for the content having the content identifier;
determining that the second request includes the nonce stored in the pending interest table; and
determining that the second request has looped back to the router.

9. A router for content based routing that receives a plurality of requests for contents, each including a content identifier, the router comprising:
a fabric switch; and
a plurality of line cards interconnected by the fabric switch, each line card comprising a network processor and a pending interest table configured to store entries for a subset of the requests defined by the content identifier,
wherein the network processor of a line card that receives a request is configured to determine which line card of the plurality of line cards is configured to process the received request based on the content identifier.

10. The router of claim 9, wherein the network processor is configured to hash the content identifier included in a received request and perform a modulus operation on the hash result to determine the line card configured to process the received request.
